# EUROPÄISCHE PATENTSCHRIFT

(11) **EP 3 340 771 B1**
(45) Veröffentlichungstag und Bekanntmachung des Hinweises auf die Patenterteilung: **24.02.2021**
(21) Anmeldenummer: 16750820.9
(22) Anmeldetag: 10.08.2016
(51) Int. Cl.: A01G 3/053

(54) **OSZILLATIONSGARTENGERÄT, GETRIEBEELEMENT EINES OSZILLATIONSGARTENGERÄTS UND VERFAHREN MIT EINEM OSZILLATIONSGARTENGERÄT**
OSCILLATING GARDENING DEVICE, GEAR ELEMENT OF AN OSCILLATING GARDENING DEVICE AND METHOD USING AN OSCILLATING GARDENING DEVICE
OUTIL DE JARDINAGE OSCILLANT, ÉLÉMENT D'ENTRAÎNEMENT D'UN OUTIL DE JARDINAGE OSCILLANT ET PROCÉDÉ AVEC UN OUTIL DE JARDINAGE OSCILLANT

(30) Priorität: 26.08.2015 DE 102015216251
(43) Veröffentlichungstag der Anmeldung: 04.07.2018
(73) Patentinhaber: Robert Bosch GmbH, 70442 Stuttgart (DE)
(72) Erfinder: MILUS, Thomas, 3529 Miskolc (HU); SOLTESZ, Robert, 3530 Miskolc (HU); NAGY, Janos, 3443 Meznagymihaly (HU); HEYWOOD, Peter, Norton, Suffolk IP 31 3LE (GB); LISTER, John, St. Edmunds, Suffolk IP32 7PT (GB)
(86) Internationale Anmeldenummer: PCT/EP2016/069013
(87) Internationale Veröffentlichungsnummer: WO 2017/032602

(56) Entgegenhaltungen:
- EP-A1- 0 170 849
- JP-A- 2008 220 243
- JP-A- 2013 066 405
- RU-C1- 2 206 196

## Beschreibung

### Stand der Technik

Aus der DE 691 19 387 T2 ist eine Heckenschere bekannt, welche eine Antriebseinheit und ein durch die Antriebseinheit angetriebenes Kurvengetriebe umfasst. Das Kurvengetriebe ist dazu vorgesehen, eine Drehbewegung einer Ausgangswelle der Antriebseinheit in eine axiale Bewegung zum Antrieb wenigstens einer Klinge eines Bearbeitungswerkzeugs der Heckenschere umzuwandeln. Das Kurvengetriebe weist ein scheibenförmiges Getriebeelement in Form eines mit epitrochoidischen Seiten versehenen gleichseitigen Dreiecks auf, welches in eine korrespondierende Ausnehmung eines zu führenden Elements des Kurvengetriebes eingreift. Ferner sei auf die Druckschriften JP 2013 066405 A, EP 0 170 849 A1 und RU 2 206 196 C1 verwiesen. Aus der RU 2 206 196 C1 ist ein Oszillationsgartengerät gemäß dem einleitenden Teil von Anspruch 1 bekannt.

### Offenbarung der Erfindung

Die Erfindung betrifft ein Oszillationsgartengerät mit den Merkmalen des Anspruchs 1.

Das Oszillationsgartengerät, insbesondere eine Heckenschere, eine Strauchschere, eine Grasschere und/oder eine Astschere, ist mit einer Antriebseinheit und mit zumindest einem durch die Antriebseinheit antreibbaren Kurvengetriebe ausgebildet, welches zumindest einen Führungsabschnitt für zumindest ein zu führendes Element aufweist, wobei der Führungsabschnitt um eine Drehachse drehbar und bezüglich dieser in Umfangsrichtung geschlossen ausgebildet ist, wobei der Führungsabschnitt exzentrisch zur Drehachse angeordnet ist und in der Umfangsrichtung, insbesondere bei Betrachtung in eine Richtung parallel zur Drehachse, zumindest wesentlich von einer Kreis- und/oder Kreisringform abweicht.

Dadurch können vorteilhafte Eigenschaften bei einer Gartenbearbeitung, insbesondere vorteilhafte Schnitteigenschaften, erreicht werden können. Insbesondere können eine Schnittqualität, eine Schnittleistung und/oder eine Schnitteffizient, insbesondere beim Heckenschneiden, gesteigert werden, insbesondere durch starke, schnelle und saubere Schnitte sowie durch eine hohe Effizienz über einen weiten Bereich von Astdicken hinweg. Ferner kann durch eine entsprechende Formgebung des Führungsabschnitts vorteilhaft auf eine Bewegung eines Bearbeitungswerkzeugs des Oszillationsgartengeräts Einfluss genommen werden. Die Bewegung kann insbesondere den jeweiligen Bedürfnissen angepasst werden. Darüber hinaus kann eine einfache Konstruktion ermöglicht werden.

Unter einem "Oszillationsgartengerät" soll in diesem Zusammenhang insbesondere ein Gartengerät verstanden werden, welches zumindest ein Bearbeitungswerkzeug aufweist, das in zumindest einem Betriebszustand in Oszillationszyklen angetrieben ist, insbesondere mittels der Antriebseinheit und/oder dem Kurvengetriebe, und welches insbesondere ein Bearbeitungswerkzeug aufweist, das dazu vorgesehen ist, zumindest teilweise eine oszillierende Bewegung auszuführen, bei welcher insbesondere eine Bewegungsrichtung insbesondere periodisch wechselt. Vorzugsweise ist das Oszillationsgartengerät ein handgehaltenes und/oder handgeführtes Gartengerät. Unter einem "Bearbeitungswerkzeug" soll insbesondere ein Einsatzwerkzeug verstanden werden, welches dazu vorgesehen ist, eine Gartenarbeit, vorzugsweise eine Schnittarbeit, zumindest zu unterstützen und vorzugsweise durchzuführen. Das Bearbeitungswerkzeug weist dabei vorzugsweise zumindest eine Klinge und vorzugsweise zumindest zwei Klingen auf, welche insbesondere miteinander kooperierend dazu vorgesehen sind, die Gartenarbeit, vorzugsweise die Schnittarbeit, zumindest zu unterstützen und vorzugsweise durchzuführen. Dabei kann nur eine der zumindest zwei Klingen oder es können auch beide Klingen angetrieben sein. Die beiden Klingen können sich in einem Betriebszustand einerseits in Längsrichtung aber auch in Querrichtung zumindest im Wesentlichen parallel relativ zueinander bewegen.

Darunter, dass ein Bearbeitungswerkzeug "in Oszillationszyklen angetrieben" ist, soll insbesondere verstanden werden, dass zumindest ein Element, vorzugsweise zumindest eine Klinge, des Bearbeitungswerkzeug oszillierend, insbesondere periodisch, angetrieben ist, insbesondere mit einer Oszillationsfrequenz und einer Oszillationsperiodendauer, insbesondere durch die Antriebseinheit. Die Antriebseinheit kann dabei zumindest einen Verbrennungsmotor und/oder vorzugsweise wenigstens einen Elektromotor umfassen. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung kleiner als 8°, insbesondere kleiner als 5° vorzugsweise kleiner als 2° und besonders vorteilhaft von 0° aufweist.

Unter einem "Kurvengetriebe" soll insbesondere eine Einheit verstanden werden, welche wenigstens zwei miteinander kooperierende Getriebeelemente aufweist, von denen ein erstes der Getriebeelemente, insbesondere durch die Antriebseinheit, angetrieben ist und ein zweites der Getriebeelemente, insbesondere das zu führende Element, in zumindest einem Betriebszustand eine bewegte Kurve, insbesondere den Führungsabschnitt, des ersten Getriebeelements abfährt. Unter einem "Führungsabschnitt" eines Kurvengetriebes soll in diesem Zusammenhang insbesondere ein Bereich zumindest eines Getriebeelements des Kurvengetriebes verstanden werden, welcher dazu vorgesehen ist, wenigstens eine Führungsfläche für ein weiteres Getriebeelement des Kurvengetriebes, insbesondere für das zu führende Element, bereitzustellen. Insbesondere ist das zu führende Element mechanisch mit wenigstens einem Teil, vorzugsweise einer Klinge, des Bearbeitungswerkzeugs gekoppelt und besonders vorteilhaft einstückig mit dem Teil verbunden. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Darunter, dass der Führungsabschnitt "exzentrisch zur Drehachse" angeordnet ist, soll insbesondere verstanden werden, dass bei Betrachtung in eine Richtung parallel zur Drehachse ein Flächenschwerpunkt der vom Führungsabschnitt umschlossenen Fläche von der Drehachse beabstandet ist. Darunter, dass eine Form "zumindest wesentlich" von einer Referenzform, insbesondere einer Kreis- und/oder Kreisringform, abweicht, soll insbesondere verstanden werden, dass die Form mit einem Volumen- und/oder Flächenanteil von wenigstens 10 %, insbesondere von zumindest 20 %, vorzugsweise von mindestens 30 % und besonders vorteilhaft von wenigstens 40 % von der Referenzform abweicht. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Der Führungsabschnitt könnte insbesondere als eine geschlossene Führungsnut eines insbesondere als Kurvenscheibe ausgebildeten Getriebeelements ausgebildet sein, wobei das Getriebeelement vorzugsweise zumindest im Wesentlichen scheibenförmig, insbesondere kreisscheibenförmig ausgebildet sein könnte. Das Getriebeelement könnte dabei insbesondere um eine zentrisch angeordnete Drehachse drehbar sein. Hierdurch kann vorteilhaft eine Unwucht reduziert werden. Ferner kann eine höhere Flexibilität hinsichtlich von möglichen Bewegungsabläufen realisiert werden.

In einer alternativen Ausgestaltung der Erfindung wird vorgeschlagen, dass das Kurvengetriebe zumindest eine Exzenterscheibe umfasst, welche insbesondere dazu vorgesehen ist, in eine Ausnehmung des zu führenden Elements, vorzugsweise eine Ringöffnung des zu führenden Elements, zumindest teilweise einzugreifen, und der Führungsabschnitt als eine bezüglich der Drehachse radiale Au-ßenfläche der Exzenterscheibe ausgebildet ist. Hierdurch kann eine vorteilhaft einfache Konstruktion erreicht werden. Insbesondere kann auf bewährte Konstruktionsmerkmale zurückgegriffen werden. Die Exzenterscheibe ist dabei drehbar um eine Drehachse gelagert, welche der Drehachse des Führungsabschnitts entspricht. Vorzugsweise weist die Exzenterscheibe zumindest im Wesentlichen die Form eines Zylinders, insbesondere eines senkrechten Zylinders, auf mit einer wesentlich von einer Kreisform abweichenden Grundfläche. Darunter, dass eine Form "zumindest im Wesentlichen" einer Referenzform, insbesondere einer Zylinderform, entspricht, soll insbesondere verstanden werden, dass die Form mit einem Volumen- und/oder Flächenanteil von höchstens 10 %, insbesondere von maximal 7,5 %, vorzugsweise von höchstens 5 % und besonders vorteilhaft von maximal 2,5 % von der Referenzform abweicht. Unter einer bezüglich der Drehachse "radialen Außenfläche der Exzenterscheibe" soll insbesondere eine äußere Oberfläche der Exzenterscheibe verstanden werden, welche wenigstens einen von der Drehachse wegweisenden Normalenvektor aufweist. Vorzugsweise ist der Normalenvektor dabei zumindest im Wesentlichen senkrecht zur Drehachse. Besonders vorteilhaft ist die Außenfläche der Exzenterscheibe eine Mantelfläche des senkrechten Zylinders mit der wesentlich von einer Kreisform abweichenden Grundfläche. Der Ausdruck "zumindest im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel zwischen 80° und 100°, insbesondere zwischen 85° und 95°, vorzugsweise zwischen 88° und 92° und besonders vorteilhaft von 90° einschließen.

Erfindungsgemäß ist eine Erstreckung der Exzenterscheibe entlang einer zur Drehachse senkrechten Richtung für sämtliche Drehlagen der Exzenterscheibe um die Drehachse gleich. Hierdurch kann vorteilhaft eine Zuverlässigkeit gesteigert werden. Ferner kann eine vorteilhafte Bewegung des Bearbeitungswerkzeugs erreicht werden. Insbesondere entspricht die Erstreckung der Exzenterscheibe entlang der Richtung zumindest im Wesentlichen einer Erstreckung der Ausnehmung des zu führenden Elements, vorzugsweise der Ringöffnung des zu führenden Elements, entlang dieser Richtung. Unter einer "Erstreckung" eines Elements soll insbesondere ein maximaler Abstand zweier Punkte einer senkrechten Projektion des Elements auf eine Ebene verstanden werden. Insbesondere bewegt sich die gleichbleibende Erstreckung oszillierend entlang der Richtung während einer Drehung der Exzenterscheibe, wobei diese oszillierende Bewegung durch das Kurvengetriebe in zumindest einem Betriebszustand in eine oszillierende Bewegung wenigstens eines Teils des Bearbeitungswerkzeugs umgesetzt ist.
Erfindungsgemäß ist der Führungsabschnitt frei von einer Spiegelsymmetrie bezüglich einer die Drehachse beinhaltenden Spiegelsymmetrieebene und/oder frei von einer n-zähligen Drehsymmetrie bezüglich einer zur Drehachse parallelen Drehsymmetrieachse. Dadurch können besonders vorteilhafte Eigenschaften bei einer Gartenbearbeitung, insbesondere besonders vorteilhafte Schnitteigenschaften, erreicht werden. Unter einer "n-zähligen Drehsymmetrie" bezüglich einer Drehsymmetrieachse soll in diesem Zusammenhang insbesondere eine Symmetrie verstanden werden, welche ein Objekt bei einer Drehung des Objekts um die Drehsymmetrieachse um einen Winkel von 360°/n auf das Objekt selbst abbildet.

Ferner wird vorgeschlagen, dass der Führungsabschnitt zumindest einen ersten Teilbereich und wenigstens einen vom ersten Teilbereich verschiedenen zweiten Teilbereich aufweist, durch welche unterschiedliche Bearbeitungsphasen eines Oszillationszyklus eines Bearbeitungswerkzeugs gekennzeichnet sind. Hierdurch kann eine Flexibilität vorteilhaft erhöht werden, insbesondere kann eine Anpassung an gegebene Arbeitsbedingungen erfolgen. Vorzugsweise erstrecken sich die Teilbereiche dabei bezüglich der Drehachse jeweils über einen Winkelbereich von zumindest 20°, insbesondere von wenigstens 30° und vorzugsweise von mindestens 40°. Unter einer "Bearbeitungsphase" eines Oszillationszyklus soll in diesem Zusammenhang insbesondere eine Phase des Oszillationszyklus verstanden werden, in welcher bestimmte, insbesondere periodisch wiederkehrende Vorgänge ablaufen. Bei der Bearbeitungsphase kann es sich insbesondere um eine Haltephase und/oder eine Schnittphase und/oder eine Vorbereitungsphase handeln. Unter einer "Haltephase" soll in diesem Zusammenhand insbesondere eine Phase des Oszillationszyklus verstanden werden, in welcher eine Bewegung des Bearbeitungswerkzeugs zumindest im Wesentlichen zeitweise angehalten wird, vorzugsweise um eine Aufnahme von Schnittgut in einen Schnittbereich des Bearbeitungswerkzeugs zumindest zu erleichtern. Darunter, dass eine Bewegung des Bearbeitungswerkzeug "zumindest im Wesentlichen" angehalten wird, soll insbesondere verstanden werden, dass Relativgeschwindigkeiten zwischen Teilen des Bearbeitungswerkzeugs höchstens 1 mm/s, insbesondere maximal 0,1 mm/s und vorzugsweise höchstens 0,01 mm/s betragen. Unter einer "Schnittphase" soll insbesondere eine Phase des Oszillationszyklus verstanden werden, in welcher Schnittgut durch das Bearbeitungswerkzeug geschnitten wird. Unter einer "Vorbereitungsphase" soll hierbei insbesondere eine Phase des Oszillationszyklus verstanden werden, in welcher ein nachfolgender Schritt durch eine entsprechende Einstellung und/oder Stellung und/oder Bewegung des Bearbeitungswerkzeugs vorbereitet wird.

In einer bevorzugten Ausgestaltung der Erfindung wird vorgeschlagen, dass zumindest einer der Teilbereiche sich vorzugsweise bezüglich der Drehachse über einen Winkelbereich von zumindest 20°, insbesondere von wenigstens 30° und vorzugsweise von mindestens 40°erstreckt und bezüglich der Drehachse einen Kreis- und/oder Kreisringbogen beschreibt, um eine Bewegung des Bearbeitungswerkzeugs während zumindest einer Haltephase zumindest im Wesentlichen zeitweise anzuhalten. Hierdurch kann vorteilhaft eine Zuführung von zu bearbeitendem Material, insbesondere von pflanzlichem Material, in einen Bearbeitungsbereich, insbesondere einen Schnittbereich, verbessert werden. Insbesondere kann eine bei der Gartenbearbeitung auf das zu bearbeitende Material ausgeübte Kraft verringert werden. Ferner kann aufgrund der in diesem Fall auftretenden geringen Reibung zwischen den Klingen des Bearbeitungswerkzeugs nachfolgend eine vorteilhafte Beschleunigung der Antriebseinheit erreicht werden.

In einer besonders bevorzugten Ausgestaltung der Erfindung wird vorgeschlagen, dass zumindest einer der Teilbereiche sich vorzugsweise bezüglich der Drehachse über einen Winkelbereich von zumindest 20°, insbesondere von wenigstens 30° und vorzugsweise von mindestens 40°erstreckt und einen Teil einer Spiralform beschreibt, um eine vorzugsweise beschleunigte Bewegung des Bearbeitungswerkzeugs während zumindest einer Schnittphase bereitzustellen. Hierdurch kann vorteilhaft eine Bearbeitung des Materials, insbesondere des pflanzlichen Materials, insbesondere ein Schneiden des Materials, verbessert werden. Insbesondere kann eine schnelle Klingenbewegung für einen sauberen Schnitt erreicht werden.

Zudem wird vorgeschlagen, dass der erste Teilbereich sich über einen ersten Winkelbereich von 30° bis 100° und insbesondere von 45° bis 90° bezüglich der Drehachse erstreckt und einen Kreis- und/oder Kreisringbogen beschreibt und der zweite Teilbereich in der Umfangsrichtung an den ersten Teilbereich anschließt, sich über einen zweiten Winkelbereich von 70° bis 110° und insbesondere von 80° bis 100° bezüglich der Drehachse erstreckt und einen Teil einer Spiralform beschreibt. Hierdurch können besonders vorteilhafte Schnitteigenschaften erzielt werden. Darunter, dass ein Teilbereich des Führungsabschnitts an einen weiteren Teilbereich des Führungsabschnitts "in der Umfangsrichtung anschließt", soll insbesondere verstanden werden, dass der Teilbereich und der weitere Teilbereich unmittelbar aneinander grenzen und insbesondere wenigstens einen gemeinsamen Punkt aufweisen.

In einer weiteren Ausgestaltung der Erfindung wird vorgeschlagen, dass der Führungsabschnitt zumindest einen vom ersten Teilbereich und zweiten Teilbereich verschiedenen dritten Teilbereich aufweist, welcher in der Umfangsrichtung an den ersten Teilbereich anschließt, sich über einen dritten Winkelbereich von 30° bis 60°, insbesondere von 40° bis 50° bezüglich der Drehachse erstreckt und einen Teil einer Spiralform beschreibt. Hierdurch können eine weitere Optimierung und Anpassung an Arbeitsbedingungen vorgenommen werden.

Die Erfindung geht in einem weiteren Aspekt aus von einem Getriebeelement, insbesondere einer Exzenterscheibe, eines Kurvengetriebes eines Oszillationsgartengeräts, insbesondere einer Heckenschere, einer Strauchschere, einer Grasschere und/oder einer Astschere, mit zumindest einer Drehachse und mit zumindest einem Führungsabschnitt für zumindest ein zu führendes Element, wobei der Führungsabschnitt bezüglich der Drehachse in Umfangsrichtung geschlossen ausgebildet ist.

Es wird vorgeschlagen, dass der Führungsabschnitt exzentrisch zur Drehachse angeordnet ist und in der Umfangsrichtung, insbesondere bei Betrachtung in eine Richtung parallel zur Drehachse, zumindest wesentlich von einer Kreis- und/oder Kreisringform abweicht, wodurch vorteilhafte Eigenschaften bei einer Gartenbearbeitung, insbesondere vorteilhafte Schnitteigenschaften, erreicht werden können. Ferner kann eine einfache Konstruktion ermöglicht werden.

Ein weiterer Aspekt der Erfindung geht aus von einem Verfahren mit einem Oszillationsgartengerät, insbesondere einer Heckenschere, einer Strauchschere, einer Grasschere und/oder einer Astschere, mit einem Bearbeitungswerkzeug, welches in einem Betriebszustand in Oszillationszyklen angetrieben wird.

Es wird vorgeschlagen, dass die Oszillationszyklen jeweils in zumindest zwei Bearbeitungsphasen unterteilt werden, wodurch vorteilhafte Gartenbearbeitungseigenschaften, insbesondere vorteilhafte Schnitteigenschaften, erzielt werden können.

In dem Verfahren kann dabei insbesondere das Getriebeelement mit exzentrisch zur Drehachse angeordnetem und in der Umfangsrichtung zumindest wesentlich von einer Kreis- und/oder Kreisringform abweichendem Führungsabschnitt verwendet werden. Alternativ oder zusätzlich hierzu könnte die Antriebseinheit, insbesondere mittels Pulsweitenmodulation, derart angesteuert werden, dass sich unterschiedliche Drehgeschwindigkeiten zu unterschiedlichen Winkelstellungen der Ausgangswelle der Antriebseinheit ergeben. Insbesondere könnte in diesem Fall auch ein kreis- und/oder kreisringförmiger, exzentrisch gelagerter Führungsabschnitt, insbesondere eine kreisförmige Exzenterscheibe, verwendet werden. Ferner könnte zur Unterteilung der Oszillationszyklen in die zumindest zwei Bearbeitungsphasen zumindest ein Formänderungswerkstoff, insbesondere ein Piezo-Element, und/oder wenigstens ein Linearstellglied zum Einsatz kommen, wobei insbesondere eine Form des Führungsabschnitts, insbesondere der Exzenterscheibe, vorzugsweise dynamisch, insbesondere unter Berücksichtigung wenigstens eines Umgebungs- und/oder Bedienparameters, angepasst werden könnte.

In einem weiteren Aspekt der Erfindung, welcher insbesondere für sich allein genommen als auch in Kombination mit den vorher genannten Aspekten der Erfindung denkbar ist, wird ein Bearbeitungswerkzeug vorgeschlagen, welches zumindest zwei zumindest im Wesentlichen parallel zueinander angeordnete Klingen mit jeweils zwei Längskanten aufweist, welche jeweils eine Vielzahl von Zähnen aufweisen, wobei für den Fall, dass die Zähne der Klingen auf einer Seite des Bearbeitungswerkzeugs übereinander stehen, die Zähne der Klingen auf der anderen Seite des Bearbeitungswerkzeugs zueinander versetzt angeordnet sind. Durch eine derartige Ausgestaltung kann unter Beibehaltung einer maximalen Öffnungsweite zwischen den Zähnen eine geringere Exzentrizität eines Kurvengetriebes erreicht werden. Ferner nimmt eine relative Bewegungsweite der Klingen relativ zueinander ab. Somit können Vibrationen und Störgeräusche reduziert sowie eine Schnitteffizienz und eine Lebensdauer gesteigert werden, insbesondere aufgrund einer geringeren Beanspruchung einer Antriebseinheit und/oder des Kurvengetriebes.

Vorteilhaft sind die Zähne auf der anderen Seite des Bearbeitungswerkzeugs derart zueinander versetzt angeordnet, dass einander zugewandte Flanken der Zähne der Klingen zumindest im Wesentlichen übereinander angeordnet sind. Hierdurch kann vorteilhaft eine Schnittweite vergrößert werden.

Das erfindungsgemäße Oszillationsgartengerät soll hierbei nicht auf die oben beschriebene Anwendung und Ausführungsform beschränkt sein. Insbesondere kann das Oszillationsgartengerät zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein als Heckenschere ausgebildetes Oszillationsgartengerät mit einem Bearbeitungswerkzeug in einer isometrischen schematischen Darstellung,
- Fig. 2: eine zeitliche Entwicklung einer Verschiebung einer Klinge des Bearbeitungswerkzeugs bezüglich einer Ruheposition in einem schematischen Schaubild,
- Fig. 3: eine zeitliche Entwicklung einer Geschwindigkeit der Klinge aus Fig. 2 in einem schematischen Schaubild,
- Fig. 4: ein Kurvengetriebe des Oszillationsgartengeräts in einer schematischen isometrischen Darstellung,
- Fig. 5: ein als Exzenterscheibe ausgebildetes Getriebeelement des Kurvengetriebes in einer schematischen isometrischen Darstellung,
- Fig. 6: das Getriebeelement in einer schematischen Draufsicht mit Maßangaben,
- Fig. 7: das Getriebeelement in einer schematischen Draufsicht mit markierten Teilbereichen eines Führungsabschnitts, durch welche unterschiedliche Bearbeitungsphasen eines Oszillationszyklus des Bearbeitungswerkzeugs gekennzeichnet sind,
- Fig. 8: ein als Kurvenscheibe ausgebildetes Getriebeelement eines Kurvengetriebes eines alternativen Oszillationsgartengeräts in einer schematischen Draufsicht mit markierten Teilbereichen, durch welche unterschiedliche Bearbeitungsphasen eines Oszillationszyklus eines Bearbeitungswerkzeugs gekennzeichnet sind,
- Fig. 9: ein als Exzenterscheibe ausgebildetes Getriebeelement eines Kurvengetriebes eines weiteren Oszillationsgartengeräts in einer schematischen Draufsicht mit markierten Teilbereichen, durch welche unterschiedliche Bearbeitungsphasen eines Oszillationszyklus eines Bearbeitungswerkzeugs gekennzeichnet sind,
- Fig. 10: eine zeitliche Entwicklung einer Verschiebung einer Klinge des Bearbeitungswerkzeugs aus Fig. 9 bezüglich einer Ruheposition in einem schematischen Schaubild,
- Fig. 11: eine zeitliche Entwicklung einer Geschwindigkeit der Klinge aus Fig. 10 in einem schematischen Schaubild,
- Fig. 12: ein als Exzenterscheibe ausgebildetes Getriebeelement eines Kurvengetriebes eines weiteren alternativen Oszillationsgartengeräts in einer schematischen Draufsicht mit markierten Teilbereichen, durch welche unterschiedliche Bearbeitungsphasen eines Oszillationszyklus eines Bearbeitungswerkzeugs gekennzeichnet sind,
- Fig. 13: eine zeitliche Entwicklung einer Verschiebung einer Klinge des Bearbeitungswerkzeugs aus Fig. 12 bezüglich einer Ruheposition in einem schematischen Schaubild,
- Fig. 14: eine zeitliche Entwicklung einer Geschwindigkeit der Klinge aus Fig. 13 in einem schematischen Schaubild,
- Fig. 15: eine von zwei identischen Klingen eines Bearbeitungswerkzeugs eines weiteren Oszillationsgartengeräts in einer schematischen Draufsicht,
- Fig. 16: das Bearbeitungswerkzeug aus Fig. 15 in einer ersten Stellung der Klingen zueinander in einer schematischen isometrischen Darstellung,
- Fig. 17: das Bearbeitungswerkzeug aus Fig. 15 in einer zweiten Stellung der Klingen zueinander in einer schematischen isometrischen Darstellung und
- Fig. 18: ein Getriebeelement eines Kurvengetriebes des Oszillationsgartengeräts aus Fig. 15 in einer schematischen Draufsicht.

### Beschreibung der Ausführungsbeispiele

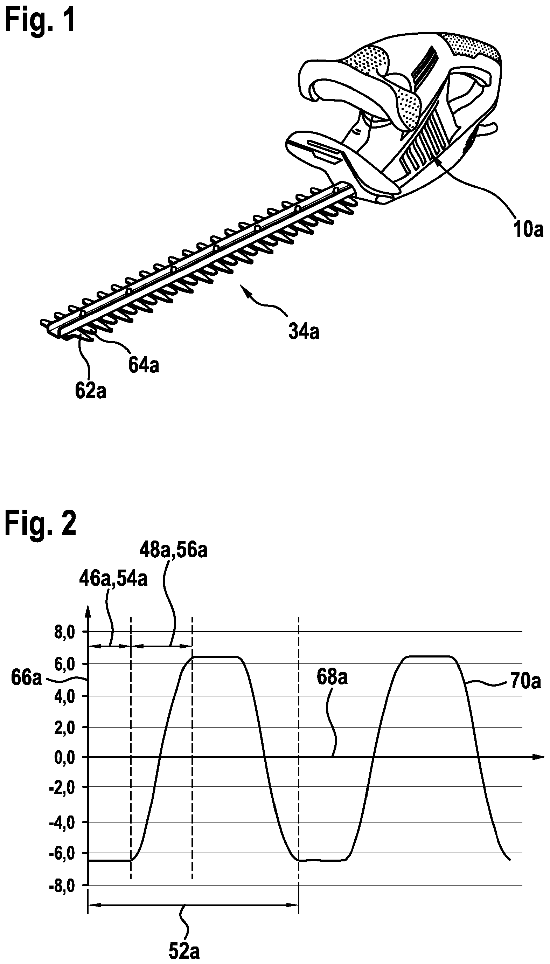

Figur 1 zeigt ein Oszillationsgartengerät in einer isometrischen Darstellung. Das Oszillationsgartengerät ist als eine Heckenschere ausgebildet. Alternativ oder zusätzlich kann das Oszillationsgartengerät auch als eine Grasschere, Strauchschere und/oder Astschere ausgebildet sein. Das Oszillationsgartengerät weist ein Bearbeitungswerkzeug 34a auf. Das Bearbeitungswerkzeug 34a weist zwei relativ zueinander bewegliche Klingen 62a, 64a auf. Ferner weist das Oszillationsgartengerät eine Antriebseinheit 10a auf, welche in einem Betriebszustand zu einem Antrieb des Bearbeitungswerkzeugs 34a vorgesehen ist. Hierbei kann die Antriebseinheit 10a dazu vorgesehen sein, eine oder auch beide der Klingen 62a, 64a anzutreiben. Vorliegend ist die Antriebseinheit 10a dazu vorgesehen, beide Klingen 62a, 64a relativ zueinander zu bewegen. In alternativen Ausgestaltungen kann ein Bearbeitungswerkzeug auch nur eine oder mehr als zwei Klingen aufweisen, wobei insbesondere auch mehr als zwei Klingen angetrieben sein könnten.

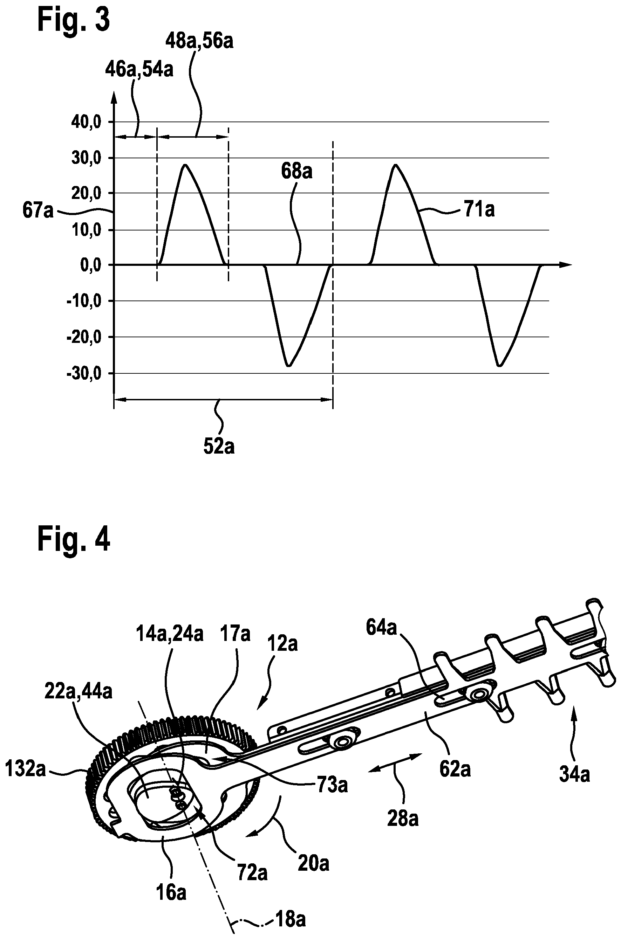

Die Antriebseinheit 10a ist dazu vorgesehen, das Bearbeitungswerkzeug 34a in Oszillationszyklen 52a anzutreiben. Figur 2 zeigt hierzu in einem schematischen Schaubild eine zeitliche Entwicklung einer Verschiebung einer der Klingen 62a, 64a bezüglich einer Ruheposition bei einem gleichförmigen Antrieb des Bearbeitungswerkzeugs 34a durch die Antriebseinheit 10a. Hierbei ist auf einer Ordinate 66a die Verschiebung der Klinge 62a, 64a bezüglich der Ruheposition "0" in Millimetern und auf einer Abszisse 68a die Zeit oder eine Winkelstellung eines Getriebeelements 44a eines Kurvengetriebes 12a des Oszillationsgartengeräts (vgl. Figur 4) aufgetragen. Eine Kurve 70a zeigt die zeitliche Entwicklung der Verschiebung der Klinge 62a, 64a. Figur 3 zeigt in einem schematischen Schaubild eine zeitliche Entwicklung einer Geschwindigkeit der Klinge 62a, 64a bei einem gleichförmigen Antrieb des Bearbeitungswerkzeugs 34a durch die Antriebseinheit 10a mit einer Umdrehungszahl des Getriebeelements 44a von 1300 Umdrehungen pro Minute. Hierbei ist auf einer Ordinate 67a die Geschwindigkeit der Klinge 62a, 64a in Millimeter pro Sekunde und auf einer Abszisse 68a die Zeit oder die Winkelstellung des Getriebeelements 44a aufgetragen. Eine Kurve 71a zeigt die zeitliche Entwicklung der Geschwindigkeit der Klinge 62a, 64a an. Eine Verschiebung und Bewegung der anderen Klinge 64a, 62a ist dabei gerade gegenläufig. Das Oszillationsgartengerät ist zur Durchführung eines Verfahrens vorgesehen, bei welchem die Oszillationszyklen 52a jeweils in zumindest zwei Bearbeitungsphasen 46a, 48a unterteilt werden. Hierbei ist ein Oszillationszyklus 52a durch genau eine vollständige Umdrehung des Getriebeelements 44a gekennzeichnet (vgl. Figur 4). Die Bearbeitungsphasen 46a, 48a treten pro Oszillationszyklus 52a zweimal auf, wobei Vorzeichen der Verschiebung und der Geschwindigkeit umgedreht sind.

Figur 4 zeigt das Kurvengetriebe 12a des Oszillationsgartengeräts in einer schematischen isometrischen Darstellung. Das Kurvengetriebe 12a ist durch die Antriebseinheit 10a über ein Antriebsrad 132a des Kurvengetriebes 12a rotatorisch antreibbar. Das Getriebeelement 44a ist dazu vorgesehen, durch die Antriebseinheit 10a um eine Drehachse 18a rotierend angetrieben zu werden. Das Getriebeelement 44a ist als eine Exzenterscheibe 22a ausgebildet. Die Exzenterscheibe 22a umfasst einen Führungsabschnitt 14a, welcher als eine bezüglich der Drehachse 18a radiale Außenfläche 24a der Exzenterscheibe 22a ausgebildet ist und welcher bezüglich der Drehachse 18a in Umfangsrichtung 20a geschlossen ausgebildet ist. Der Führungsabschnitt 14a ist zudem exzentrisch zur Drehachse 18a angeordnet. Die Exzenterscheibe 22 greift in eine ringförmige Ausnehmung 72a eines zu führenden Elements 16a des Kurvengetriebes 12a ein. Das zu führende Element 16a ist insbesondere einstückig mit der Klinge 62a verbunden und treibt diese axial entlang einer Richtung 28a an.

Das Kurvengetriebe 12a umfasst ferner ein zum Getriebeelement 44a identisch ausgebildetes weiteres Getriebeelement (in Figur 4 nicht sichtbar). Das weitere Getriebeelement kann gegenüber dem Getriebeelement 44a bei einer Blickrichtung entlang der Drehachse 18a um die Drehachse 18a um 180° gedreht oder auch spiegelsymmetrisch zu einer die Drehachse 18a beinhaltenden und zur Richtung 28a senkrechten Spiegelebene angeordnet sein. Das weitere Getriebeelement greift in eine weitere ringförmige Ausnehmung 73a eines weiteren zu führenden Elements 17a des Kurvengetriebes 12a ein, welches insbesondere einstückig mit der Klinge 64a verbunden ist. Das Getriebeelement 44a und das weitere Getriebeelement sind fest miteinander verbunden und über eine gemeinsame Welle über das Antriebsrad 132a angetrieben. Für den Fall, dass ein Bearbeitungswerkzeug weitere angetriebene Klingen aufweist, könnten entsprechend weitere Getriebeelemente vorgesehen sein.

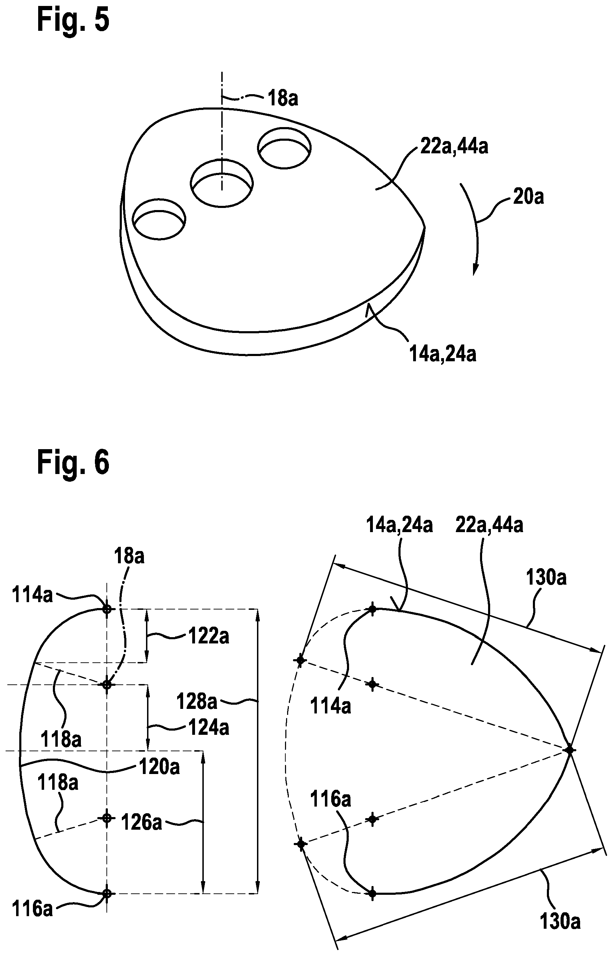

Figur 5 zeigt die Exzenterscheibe 22a in einer schematischen isometrischen Darstellung. Um eine Unterteilung der Oszillationszyklen 52a in zumindest zwei Bearbeitungsphasen 46a, 48a zu erzielen, weicht die Exzenterscheibe 22a und damit auch der Führungsabschnitt 14a in der Umfangsrichtung 20a, insbesondere bei Betrachtung in eine Richtung parallel zur Drehachse 18a, zumindest wesentlich von einer Kreisform ab. Der Führungsabschnitt 14a ist zudem frei von einer Spiegelsymmetrie bezüglich einer die Drehachse 18a beinhaltenden Spiegelsymmetrieebene und frei von einer n-zähligen Drehsymmetrie bezüglich einer zur Drehachse 18a parallelen Drehsymmetrieachse.

Figur 6 zeigt die Exzenterscheibe 22a in einer schematischen Draufsicht mit Maßangaben. Die Exzenterscheibe 22a ist der Übersichtlichkeit halber in zwei Teile zerlegt, welche an den Punkten 114a, 116a zusammengesetzt zu denken sind. Ein Radius 118a beträgt 7,320 mm. Ein Radius eines Kreisbogens 120a beträgt 26,500 mm. Eine Länge 122a beträgt 4,866 mm. Eine Länge 124a beträgt 6,430 mm. Eine Länge 126a beträgt 13,750 mm. Eine Länge 128a beträgt 27,500 mm. Eine Länge 130a beträgt 27,500 mm.

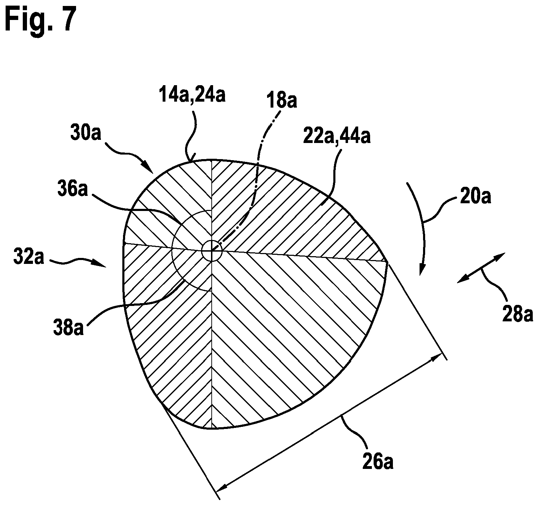

Figur 7 zeigt die Exzenterscheibe 22a in einer schematischen Draufsicht. Eine Erstreckung 26a der Exzenterscheibe 22a entlang der zur Drehachse 18a senkrechten Richtung 28a ist für sämtliche Drehlagen der Exzenterscheibe 22a um die Drehachse 18a gleich. Die Erstreckung 26a entspricht dabei zumindest im Wesentlichen einer Erstreckung der Ausnehmung 72a entlang der Richtung 28a (vgl. Figur 4), wodurch insbesondere sichergestellt ist, dass die Exzenterscheibe 22a stets zumindest im Wesentlichen passgenau in der Ausnehmung 72a sitzt.

Der Führungsabschnitt 14a weist zumindest einen ersten Teilbereich 30a und wenigstens einen vom ersten Teilbereich 30a verschiedenen zweiten Teilbereich 32a auf, durch welche die unterschiedlichen Bearbeitungsphasen 46a, 48a des Oszillationszyklus 52a des Bearbeitungswerkzeugs 34a gekennzeichnet sind (vgl. Figuren 2 und 3). Die Teilbereiche 30a, 32a sind hierbei in den Figuren durch unterschiedliche Schraffuren kenntlich gemacht. Die Teilbereiche 30a, 32a umfassen jeweils zwei sich hinsichtlich der Drehachse 18a gegenüberliegende Teile, die in einer der Bearbeitungsphasen 46a, 48a an sich gegenüberliegenden, die Ausnehmung 72a begrenzenden Rändern des zu führenden Elements 16a zumindest im Wesentlichen anliegen.

Der erste Teilbereich 30a ist der Bearbeitungsphase 46a zugeordnet. Der erste Teilbereich 30a erstreckt sich bezüglich der Drehachse 18a über einen ersten Winkelbereich 36a von 80° bis 90°, insbesondere von 85°. Der erste Teilbereich 30a beschreibt bezüglich der Drehachse 18a einen Kreisbogen, um eine Bewegung des Bearbeitungswerkzeugs 34a zumindest im Wesentlichen zeitweise anzuhalten. Demzufolge stellt die Bearbeitungsphase 46a eine Haltephase 54a dar (vgl. Figuren 2 und 3). In der Haltephase 54a wird eine Öffnung zwischen Zähnen der Klingen 62a, 64a über eine längere Zeit offen gehalten, um eine vorteilhafte Aufnahme von zu schneidendem Gut zwischen den Zähnen zu erreichen. Insbesondere kann damit sichergestellt werden, dass relativ dünne Äste in der Öffnung zwischen den Zähnen zu liegen kommen. Ferner kann eine ausreichende Zeit bereitgestellt werden, um auch relativ dicken Ästen eine sichere Aufnahme in der Öffnung zwischen den Zähnen zu gestatten. Hierdurch kann insbesondere eine unerwünschte Krafteinwirkung auf das zu schneidende Material reduziert werden wodurch insbesondere ein Schnitt und/oder eine Formgebung von Büschen und/oder Hecken vereinfacht werden kann. Da während der Haltephase 54a keine Reibung zwischen den Klingen 62a, 64a auftritt, kann darüber hinaus anschließend eine vorteilhafte Beschleunigung der Antriebseinheit 10a erreicht werden.

Der zweite Teilbereich 32a ist der Bearbeitungsphase 48a zugeordnet. Der zweite Teilbereich 32a erstreckt sich bezüglich der Drehachse 18a über einen zweiten Winkelbereich 38a von 90° bis 100°, insbesondere von 95°. Der zweite Teilbereich 32a beschreibt bezüglich der Drehachse 18a einen Teil einer Spiralform, um eine beschleunigte Bewegung des Bearbeitungswerkzeugs 34a bereitzustellen. Die Bearbeitungsphase 48a stellt eine Schnittphase 56a dar (vgl. Figuren 2 und 3). In der Schnittphase 56a wird das sich zwischen den Zähnen der Klinge 62a, 64a befindliche zu schneidende Gut in einer beschleunigten Bewegung der Zähne relativ zueinander sauber zerschnitten, wodurch insbesondere wiederum eine unerwünschte Krafteinwirkung auf das zu schneidende Material reduziert werden kann.

Der erste Winkelbereich 36a und der zweite Winkelbereich 38a ergänzen sich zu 180°.

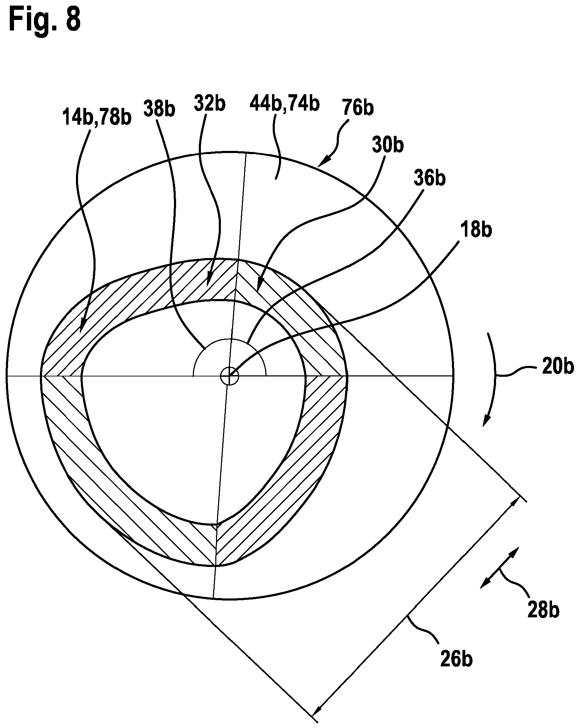

In Figuren 8 bis 18 sind weitere Ausführungsbeispiele der Erfindung gezeigt. Die nachfolgende Beschreibung und die Figuren beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Figuren und/oder die Beschreibung der anderen Ausführungsbeispiele, insbesondere der Figuren 1 bis 7, verwiesen werden kann. Zur Unterscheidung der Ausführungsbeispiele ist der Buchstabe "a" den Bezugszeichen des Ausführungsbeispiels in den Figuren 1 bis 7 nachgestellt. In den Ausführungsbeispielen der Figuren 8 bis 18 ist der Buchstabe "a" durch den Buchstaben "b", "c", "d" und "e" ersetzt.

Figur 8 zeigt ein als Kurvenscheibe 74b ausgebildetes Getriebeelement 44b eines Kurvengetriebes eines alternativen Oszillationsgartengeräts in einer schematischen Draufsicht. Das Getriebeelement 44b ist insbesondere dazu vorgesehen, zumindest im Wesentlichen den gleichen Bewegungsablauf eines Bearbeitungswerkzeugs zu erzeugen wie das Getriebeelement 44a aus dem vorhergehenden Ausführungsbeispiel (vgl. Figuren 2 und 3). Die Kurvenscheibe 74b ist rotatorisch um eine Drehachse 18b gelagert, welche im Mittelpunkt eines durch einen Au-βenrand 76b der Kurvenscheibe 74b definierten Kreises liegt. Das Getriebeelement 44b weist einen Führungsabschnitt 14b auf, welcher als eine Führungsnut 78b ausgebildet und insbesondere dazu vorgesehen ist, ein nicht dargestelltes Element, welches insbesondere mit wenigstens einer Klinge des Bearbeitungswerkzeugs vorzugsweise einstückig verbunden ist, zu führen. Der Führungsabschnitt 14b ist um die Drehachse 18b drehbar und bezüglich dieser in Umfangsrichtung 20b geschlossen ausgebildet. Der Führungsabschnitt 14b ist exzentrisch zur Drehachse 18b angeordnet und weicht in der Umfangsrichtung 20b, insbesondere bei Betrachtung entlang einer zur Drehachse 18b parallelen Richtung, zumindest wesentlich von einer Kreisringform ab. Ein erster Teilbereich 30b und ein zweiter Teilbereich 32b der Führungsnut 78b sind zur Verdeutlichung schraffiert dargestellt. Eine Erstreckung 26b des Führungsabschnitts 14b entlang einer zur Drehachse 18b senkrechten Richtung 28b ist zwar im vorliegenden Ausführungsbeispiel für sämtliche Drehlagen des Führungsabschnitts 14b um die Drehachse 18b gleich, dies muss jedoch bei einer Ausgestaltung des Getriebeelements 44b als eine Kurvenscheibe 74b nicht der Fall sein.

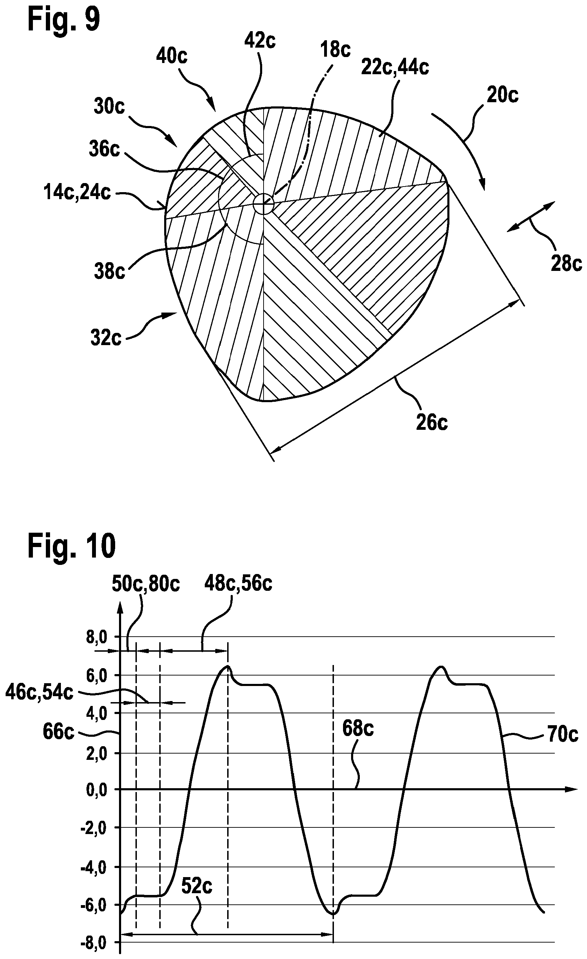

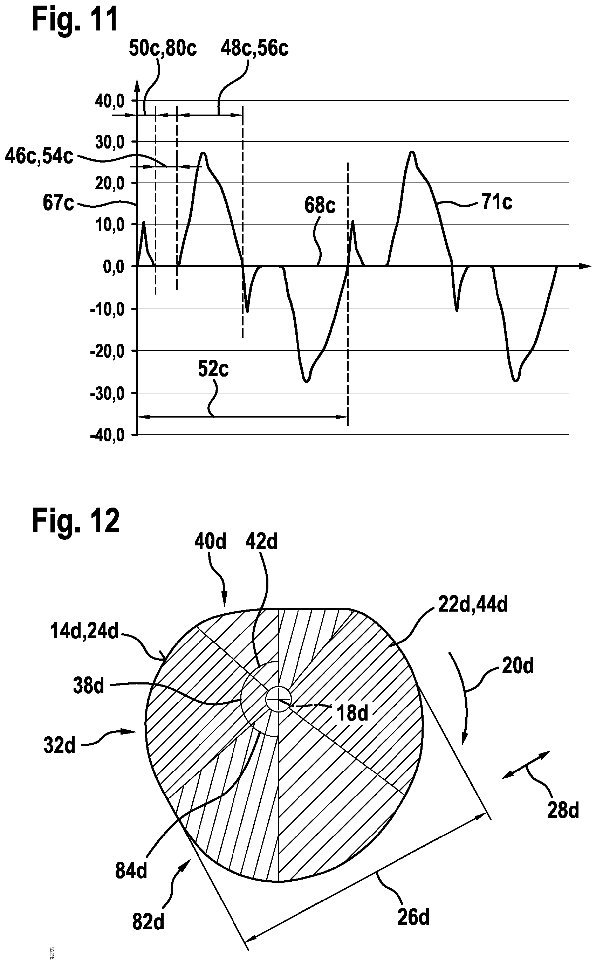

Figur 9 zeigt ein als Exzenterscheibe 22c ausgebildetes Getriebeelement 44c eines Kurvengetriebes eines weiteren Oszillationsgartengeräts in einer schematischen Draufsicht. Das Getriebeelement 44c ist dazu vorgesehen, eine Relativbewegung von Klingen eines Bearbeitungswerkzeugs des Oszillationsgartengeräts gemäß den in Figuren 10 und 11 gezeigten schematischen Schaubildern bereitzustellen. Eine Erstreckung 26c der Exzenterscheibe 22c entlang einer zu einer Drehachse 18c senkrechten Richtung 28c ist für sämtliche Drehlagen der Exzenterscheibe 22c um die Drehachse 18c gleich. Die Exzenterscheibe 22c umfasst einen Führungsabschnitt 14c, welcher als eine bezüglich der Drehachse 18c radiale Außenfläche 24c der Exzenterscheibe 22c ausgebildet ist und welcher bezüglich der Drehachse 18c in Umfangsrichtung 20c geschlossen ausgebildet ist. Der Führungsabschnitt 14c ist zudem exzentrisch zur Drehachse 18c angeordnet.

Der Führungsabschnitt 14c weist einen ersten Teilbereich 30c und einen vom ersten Teilbereich 30c verschiedenen zweiten Teilbereich 32c auf. Der Führungsabschnitt 14c weist ferner einen vom ersten Teilbereich 30c und vom zweiten Teilbereich 32c verschiedenen dritten Teilbereich 40c auf. Die Teilbereiche 30c, 32c, 40c schließen in der Umfangsrichtung 20c aneinander an. Durch die Teilbereiche 30c, 32c, 40c sind unterschiedliche Bearbeitungsphasen 46c, 48c, 50c eines Oszillationszyklus 52c des Bearbeitungswerkzeugs gekennzeichnet (vgl. Figuren 10 und 11).

Der dritte Teilbereich 40c ist der Bearbeitungsphase 50c zugeordnet. Der dritte Teilbereich 40c erstreckt sich bezüglich der Drehachse 18c über einen dritten Winkelbereich 42c von 40° bis 50°, insbesondere von 45°. Der dritte Teilbereich 40c beschreibt bezüglich der Drehachse 18c einen Teil einer Spiralform, um eine Bewegung des Bearbeitungswerkzeugs bereitzustellen. Die Bearbeitungsphase 50c stellt eine Vorbereitungsphase 80c dar (vgl. Figuren 10 und 11). In der Vorbereitungsphase 80c wird eine Öffnung zwischen Zähnen der Klingen des Bearbeitungswerkzeugs insbesondere in einer relativ schnellen Bewegung leicht geschlossen, um dadurch eine sägenähnliche Wirkung hinsichtlich dicker Äste zu erzielen. Ferner wird verhindert, dass sich dicke Äste zwischen den Zähnen verfangen und gegebenenfalls zu einem Blockieren und/oder zu einem Stillstand einer Antriebseinheit führen.

Der erste Teilbereich 30c ist der Bearbeitungsphase 46c zugeordnet. Der erste Teilbereich 30c erstreckt sich bezüglich der Drehachse 18c über einen ersten Winkelbereich 36c von 50° bis 60°, insbesondere von 55°. Der erste Teilbereich 30c beschreibt bezüglich der Drehachse 18c einen Kreisbogen, um eine Bewegung des Bearbeitungswerkzeugs zumindest im Wesentlichen zeitweise anzuhalten. Der erste Teilbereich 30c ist in der Umfangsrichtung 20c betrachtet dem dritten Teilbereich 40c nachgeschaltet. Die Bearbeitungsphase 46c stellt eine Haltephase 54c dar (vgl. Figuren 10 und 11). In der Haltephase 54c wird eine Öffnung zwischen den Zähnen der Klingen über eine längere Zeit offen gehalten, um eine vorteilhafte Aufnahme von zu schneidendem Gut zwischen den Zähnen zu erreichen, insbesondere von relativ dünnen Ästen, welche in einem Durchgang geschnitten werden können. Hierdurch kann insbesondere eine unerwünschte Krafteinwirkung auf das zu schneidende Material reduziert werden, wodurch insbesondere ein Schnitt und/oder eine Formgebung von Büschen und/oder Hecken vereinfacht werden kann. Da während der Haltephase 54c keine Reibung zwischen den Klingen auftritt, kann darüber hinaus nachfolgend eine vorteilhafte Beschleunigung einer Antriebseinheit erreicht werden.

Der zweite Teilbereich 32c ist der Bearbeitungsphase 48c zugeordnet. Der zweite Teilbereich 32c erstreckt sich bezüglich der Drehachse 18c über einen zweiten Winkelbereich 38c von 75° bis 85°, insbesondere von 80°. Der zweite Teilbereich 32c beschreibt bezüglich der Drehachse 18c einen Teil einer Spiralform, um eine beschleunigte Bewegung des Bearbeitungswerkzeugs bereitzustellen. Der zweite Teilbereich 40c ist in der Umfangsrichtung 20c betrachtet dem ersten Teilbereich 30c nachgeschaltet. Die Bearbeitungsphase 48c stellt eine Schnittphase 56c dar (vgl. Figuren 10 und 11). In der Schnittphase 56c wird das sich zwischen den Zähnen der Klinge befindliche zu schneidende Gut in einer Bewegung der Zähne relativ zueinander komplett und sauber zerschnitten.

Der erste Winkelbereich 36c, der zweite Winkelbereich 38c und der dritte Winkelbereich 42c ergänzen sich zu 180°.

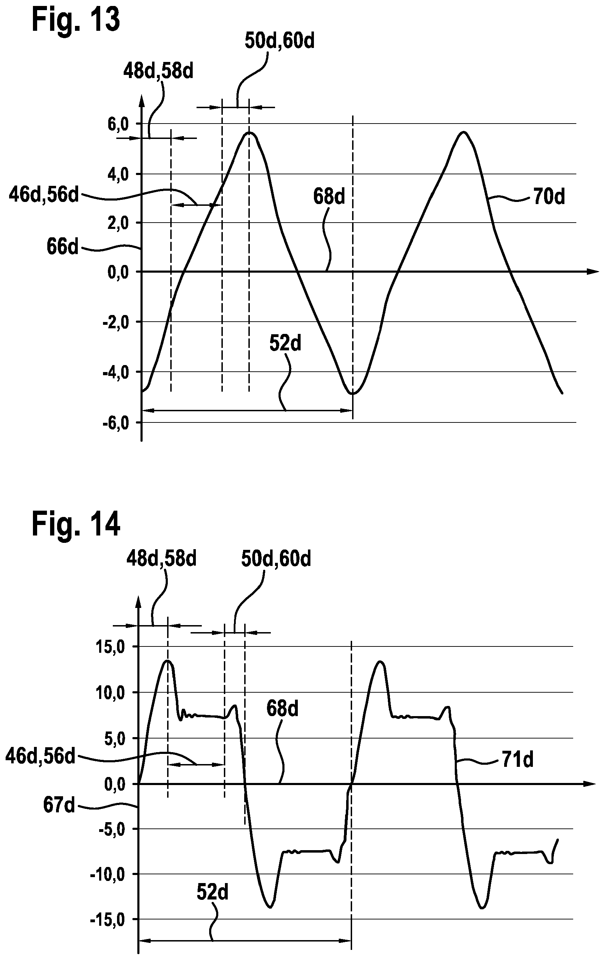

Figur 12 zeigt ein als Exzenterscheibe 22d ausgebildetes Getriebeelement 44d eines Kurvengetriebes eines weiteren alternativen Oszillationsgartengeräts in einer schematischen Draufsicht. Das Getriebeelement 44d ist dazu vorgesehen, eine Relativbewegung von Klingen eines Bearbeitungswerkzeugs des Oszillationsgartengeräts gemäß dem in Figuren 13 und 14 gezeigten schematischen Schaubildern bereitzustellen. Das Bearbeitungswerkzeug ist dabei insbesondere zum Schneiden von trockenem Holz geeignet.

Ein Führungsabschnitt 14d des Kurvengetriebes weist einen zweiten Teilbereich 32d und einen vom zweiten Teilbereich 32d verschiedenen dritten Teilbereich 40d auf. Der Führungsabschnitt 14d weist ferner einen vom zweiten Teilbereich 32d und vom dritten Teilbereich 40d verschiedenen vierten Teilbereich 82d auf.

Die Teilbereiche 32d, 40d, 82d schließen in Umfangsrichtung 20d aneinander an. Durch die Teilbereiche 32d, 40d, 82d sind unterschiedlichen Bearbeitungsphasen 46d, 48d, 50d eines Oszillationszyklus 52d des Bearbeitungswerkzeugs gekennzeichnet (vgl. Figuren 13 und 14).

Der dritte Teilbereich 40d ist der Bearbeitungsphase 48d zugeordnet. Der dritte Teilbereich 40d erstreckt sich bezüglich der Drehachse 18d über einen dritten Winkelbereich 42d von 40° bis 50°, insbesondere von 45°. Der dritte Teilbereich 40d beschreibt bezüglich der Drehachse 18d einen Teil einer Spiralform. Die Bearbeitungsphase 48d stellt eine Schnittphase 58d dar (vgl. Figuren 13 und 14). In der Schnittphase 58d wird eine Öffnung zwischen Zähnen der Klingen des Bearbeitungswerkzeug verkleinert, um insbesondere dicke Äste anzuschneiden. Hierbei tritt bei einer relativ hohen Schnittgeschwindigkeit eine relativ kleine Schnittkraft auf. Ziel der Schnittphase 58d ist es, eine zur kompletten Durchtrennung erforderliche Kraft zu reduzieren.

Der zweite Teilbereich 32d ist der Bearbeitungsphase 46d zugeordnet. Der zweite Teilbereich 32d erstreckt sich bezüglich einer Drehachse 18d über einen zweiten Winkelbereich 38d von 80° bis 90°, insbesondere von 85°. Der zweite Teilbereich 32d beschreibt bezüglich der Drehachse 18d einen Teil einer Spiralform, um eine im Vergleich zum dritten Teilbereich 40d langsamere Bewegung des Bearbeitungswerkzeugs bereitzustellen. Der zweite Teilbereich 32d ist in der Umfangsrichtung 20d betrachtet dem dritten Teilbereich 40d nachgeschaltet. Die Bearbeitungsphase 46d stellt eine Schnittphase 56d dar (vgl. Figuren 13 und 14). In der Schnittphase 56d wird eine Relativgeschwindigkeit der Zähne der Klingen zueinander reduziert, um dadurch eine höhere Schnittkraft bereitzustellen. Die erforderliche Schnittkraft steigt nämlich in der Regel an, sobald Äste zum Teil eingeschnitten wurden. Das sich zwischen den Zähnen befindliche zu schneidende Gut wird dann in einer relativ langsamen Bewegung mit relativ großer Schnittkraft zerschnitten.

Der vierte Teilbereich 82d ist der Bearbeitungsphase 50d zugeordnet. Der vierte Teilbereich 82d erstreckt sich bezüglich der Drehachse 18d über einen vierten Winkelbereich 84d von 45° bis 55°, insbesondere von 50°. Der vierte Teilbereich 82d beschreibt bezüglich der Drehachse 18d einen Teil einer Spiralform, um eine im Vergleich zum zweiten Teilbereich 32d schnellere Bewegung des Bearbeitungswerkzeugs bereitzustellen. Der vierte Teilbereich 82d ist in der Umfangsrichtung 20d betrachtet dem zweiten Teilbereich 32d nachgeschaltet. Die Bearbeitungsphase 50d stellt eine Schnittphase 60d dar (vgl. Figuren 13 und 14). In der Schnittphase 60d wird eine Relativgeschwindigkeit der Zähne der Klingen zueinander wieder erhöht, wodurch eine bereitgestellte Schnittkraft wieder absinkt. Die erforderliche Schnittkraft nimmt in der Regel zum Ende des Schnittvorgangs hin wieder ab, insbesondere stark ab. Das sich zwischen den Zähnen befindliche zu schneidende Gut wird in einer relativ schnellen Bewegung mit relativ kleiner Schnittkraft komplett und sauber zerschnitten.

Der zweite Winkelbereich 38d, der dritte Winkelbereich 42d und der vierte Winkelbereich 84d ergänzen sich zu 180°.

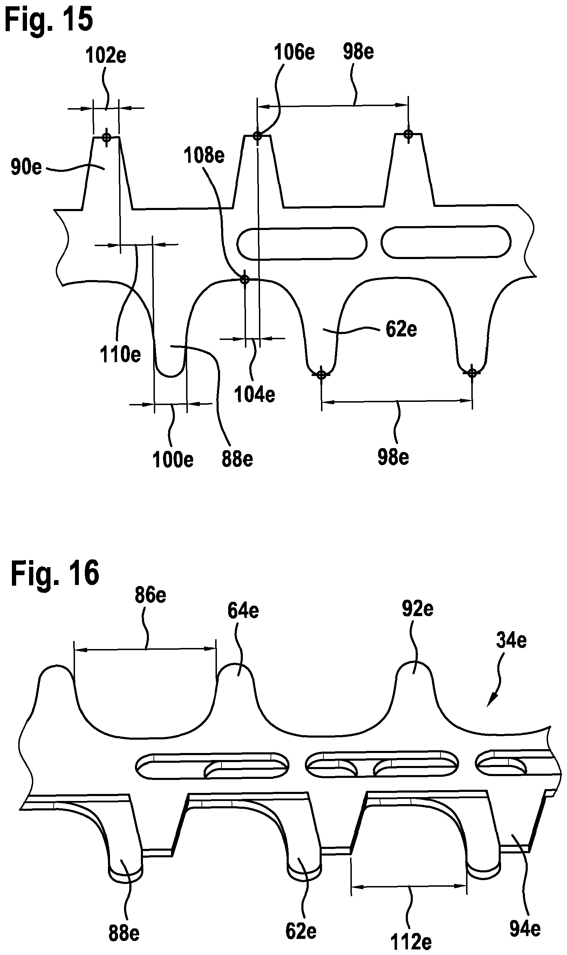

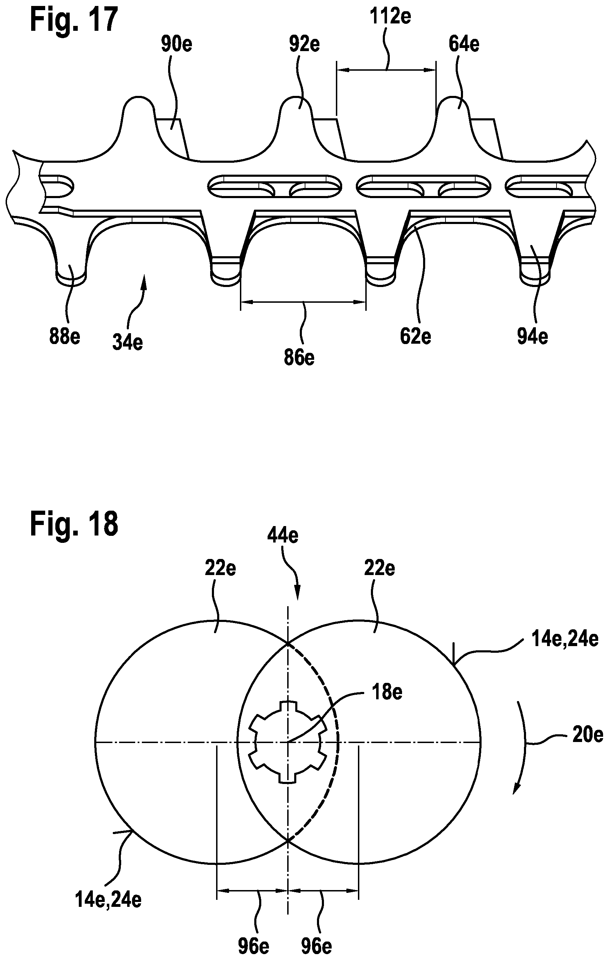

Figur 15 zeigt eine von zwei identischen Klingen 62e, 64e eines Bearbeitungswerkzeugs 34e eines weiteren Oszillationsgartengeräts in einer schematischen Draufsicht. Figur 16 zeigt das Bearbeitungswerkzeug 34e in einer ersten Stellung der Klingen 62e, 64e zueinander in einer schematischen isometrischen Darstellung, und Figur 17 beinhaltet eine entsprechende Ansicht des Bearbeitungswerkzeugs 34e in einer zweiten relativen Stellung der Klingen 62e, 64e.

Das Bearbeitungswerkzeug 34e kann mit einem beliebig ausgestalteten Kurvengetriebe, insbesondere auch mit sämtlichen Kurvengetrieben 12a aus den vorhergehenden Ausführungsbeispielen der Figuren 1 bis 14, kombiniert werden. Das Bearbeitungswerkzeug 34e ist dazu vorgesehen, insbesondere auch in Kombination mit einem Getriebeelement 44e eines Kurvengetriebes mit einem exzentrischen und kreisrunden Führungsabschnitt 14e, eine Exzentrizität 96e des Führungsabschnitts 14e zu reduzieren (vgl. Figur 18) und dennoch eine maximale Öffnungsweite 86e zwischen Zähnen 88e, 90e, 92e, 94e der Klingen 62e, 64e beizubehalten. Mit dem vorliegend zum Einsatz kommenden Getriebeelement 44e gemäß Figur 18 werden beide Klingen 62e, 64e bewegt. Hierbei greifen gemeinsam um eine Drehachse 18e gelagerte und fest miteinander verbundene, kreisförmige Exzenterscheiben 22e jeweils in eine nicht dargestellte Ausnehmung eines zu führenden Elements ein, wobei jedes zu führende Element fest, vorzugsweise einstückig, mit einer der Klingen 62e, 64e verbunden ist. Alternativ wäre auch denkbar, dass nur eine der Klingen 62e, 64e eine Bewegung erfährt. In diesem Fall hätte das Getriebeelement 44e lediglich eine Exzenterscheibe 22e.

Die Klingen 62e, 64e sind zueinander identisch aufgebaut, so dass im Folgenden lediglich die Klinge 62e anhand von Figur 15 beschrieben wird. Die Klinge 62e weist zwei Längskanten mit zwei Sätzen von Zähnen 88e, 90e unterschiedlichen Typs auf (der Übersichtlichkeit halber ist in den Figuren jeweils nur ein Zahn eines Typs mit einem Bezugszeichen versehen). Die erste Längskante weist Zähne 88e eines ersten Typs und die zweite Längskante weist Zähne 90e eines zweiten Typs auf. Ein gegenseitiger Mittelpunktsabstand 98e der Zähne 88e, 90e ist für alle unmittelbar benachbarten Zähne identisch und beträgt insbesondere 42 mm. Eine erste Zahnbreite 100e des ersten Typs von Zähnen 88e beträgt 8 mm. Eine zweite Zahnbreite 102e des zweiten Typs von Zähnen 90e beträgt 7 mm. Die Zähne 88e der ersten Längskante der Klinge 62e sind versetzt zu den Zähnen 90e der zweiten Längskante der Klinge 62e angeordnet. Dabei sind die Zähne 88e der ersten Längskante außermittig zu den Zähnen 90e der zweiten Längskante angeordnet. Genauer gesagt existiert in Längsrichtung der Klinge 62e ein Abstand 104e zwischen einem Zahnmittelpunkt 106e eines Zahns 90e der zweiten Längskante und einem nächstgelegenen Zahnzwischenraummittelpunkt 108e zwischen benachbarten Zähnen 88e der ersten Längskante. Ein minimaler Flankenabstand 110e zwischen Flanken von Zähnen 88e, 90e verschiedener Längskanten der Klinge 62e beträgt 9,75 mm. Ein Flankenabstand zwischen bei einem Schnittvorgang führenden Flanken von Zähnen 88e, 90e verschiedener Längskanten der Klinge 62e entspricht der zweifachen Exzentrizität 96e. Der Flankenabstand zwischen bei einem Schnittvorgang führenden Flanken von Zähnen 88e, 90e verschiedener Längskanten der Klinge 62e beträgt vorliegend 17,25 mm.

Figuren 16 und 17 zeigen das Bearbeitungswerkzeug 34e in zwei unterschiedlichen Stellungen während eines Oszillationszyklus des Bearbeitungswerkzeugs 34e. Während des Oszillationszyklus gilt, dass für den Fall, dass die Zähne 88e, 90e, 92e, 94e der Klingen 62e, 64e auf einer Seite des Bearbeitungswerkzeugs 34e übereinander stehen, die Zähne 88e, 90e, 92e, 94e der Klingen 62e, 64e auf der anderen Seite des Bearbeitungswerkzeugs 34e zueinander versetzt angeordnet sind, und zwar derart, dass einander zugewandte Flanken der Zähne 88e, 90e, 92e, 94e der Klingen 62e, 64e zumindest im Wesentlichen übereinander angeordnet sind. Die Klingen 62e, 64e beginnen den Oszillationszyklus derart, dass die Zähne 88e, 90e, 92e, 94e einer der Längskanten der Klingen 62e, 64e direkt übereinander liegen (vgl. Zustand aus Figur 16). Die maximale Öffnungsweite 86e ist in diesem Augenblick an der entsprechenden Längskante erreicht. Nach einer halben Umdrehung der Exzenterscheiben 22e haben sich die Zähne 88e, 90e, 92e, 94e der Längskante derart angenähert, dass die einander zugewandten Flanken der Zähne 88e, 90e, 92e, 94e an der Längskante zumindest im Wesentlichen übereinander angeordnet sind. Eine Öffnungsweite 112e ist dann um einen Mittelwert der ersten Zahnbreite 100e und der zweiten Zahnbreite 102e gegenüber der maximalen Öffnungsweite 86e reduziert (vgl. Zustand aus Figur 17). In diesem Augenblick ist die maximale Öffnungsweite 86e an der gegenüberliegenden Längskante erreicht. Nach einer vollen Umdrehung der Exzenterscheiben 22e ergibt sich erneut der Zustand aus Figur 16.

Die maximale Öffnungsweite 86e beträgt vorliegend 34 mm. Eine Exzentrizität 96e des Führungsabschnitts 14e des Kurvengetriebes beträgt 8,625 mm. Eine relative Bewegungsweite der Klingen 62e, 64e relativ zueinander entspricht der vierfachen Exzentrizität 96e, und zwar insbesondere 34,5 mm. Dabei wird die maximale Öffnungsweite 86e pro Umdrehung der Exzenterscheiben 22e an jeder Längskante einmal erreicht, insbesondere im Gegensatz zum Stand der Technik mit einer mittigen Anordnung von Zähnen von Längskanten von Klingen, wo eine maximale Öffnungsweite pro Umdrehung einer Exzenterscheibe mit größerer Exzentrizität zweimal an einer Längskante erreicht wird.

Durch eine derartige Ausgestaltung kann unter Beibehaltung der maximalen Öffnungsweite 86e zwischen Zähnen 88e, 90e, 92e, 94e eine geringere Exzentrizität 96e erreicht werden. Ferner nimmt eine relative Bewegungsweite der Klingen 62e, 64e relativ zueinander ab. Somit können Vibrationen und Störgeräusche reduziert sowie eine Schnitteffizienz und eine Lebensdauer gesteigert werden, insbesondere aufgrund einer geringeren Beanspruchung einer Antriebseinheit und/oder des Kurvengetriebes. Gegenüber einer entsprechenden Ausgestaltung mit mittiger Anordnung von Zähnen gemäß dem Stand der Technik kann eine Reduktion der Exzentrizität und der relativen Bewegungsweite von ca. 18 % erreicht werden, was zu einer entsprechenden Reduktion einer Geschwindigkeit, Beschleunigung und Kraft führt. Insbesondere kann eine Reduzierung eines erforderlichen Antriebsdrehmoments um ca. 18 % erreicht werden. Dass die maximale Öffnungsweite 86e seltener erreicht wird, spielt in der Praxis lediglich eine untergeordnete Rolle, da die meisten zu schneidenden Zweige von ihrer Dicke her ohnehin insbesondere deutlich unter der maximalen Öffnungsweite 86e liegen. Demzufolge sollte eine Gesamtschnittperformance lediglich geringfügig bis gar nicht eingeschränkt sein, insbesondere unter Berücksichtigung der Tatsache, dass aufgrund der geringeren Exzentrizität 96e eine Periodendauer der Oszillationszyklen reduziert werden könnte und die Antriebseinheit insbesondere mit einer höheren Drehfrequenz und damit gegebenenfalls bauartbedingt insbesondere mit einer höheren Effizienz betrieben werden könnte.

## Patentansprüche

1. Oszillationsgartengerät, insbesondere Heckenschere, Strauchschere, Grasschere und/oder Astschere, mit einer Antriebseinheit (10a) und mit zumindest einem durch die Antriebseinheit (10a) antreibbaren Kurvengetriebe (12a), welches zumindest einen Führungsabschnitt (14a; 14b; 14c; 14d) für zumindest ein zu führendes Element (16a, 17a) aufweist, wobei der Führungsabschnitt (14a; 14b; 14c; 14d) um eine Drehachse (18a; 18b; 18c; 18d) drehbar und bezüglich dieser in Umfangsrichtung (20a; 20b; 20c; 20d) geschlossen ausgebildet ist, wobei der Führungsabschnitt (14a; 14b; 14c; 14d) exzentrisch zur Drehachse (18a; 18b; 18c; 18d) angeordnet ist und in der Umfangsrichtung (20a; 20b; 20c; 20d) zumindest wesentlich von einer Kreis- und/oder Kreisringform abweicht, wobei das Kurvengetriebe (12a) zumindest eine Exzenterscheibe (22a; 22c; 22d) umfasst und der Führungsabschnitt (14a; 14c; 14d) als eine bezüglich der Drehachse (18a; 18c; 18d) radiale Außenfläche (24a; 24c; 24d) der Exzenterscheibe (22a; 22c; 22d) ausgebildet ist und der Führungsabschnitt (14a; 14b; 14c; 14d) frei von einer Spiegelsymmetrie bezüglich einer die Drehachse (18a; 18b; 18c; 18d) beinhaltenden Spiegelsymmetrieebene und/oder frei von einer n-zähligen Drehsymmetrie bezüglich einer zur Drehachse (18a; 18b; 18c; 18d) parallelen Drehsymmetrieachse ist, **dadurch gekennzeichnet, dass** eine Erstreckung (26a; 26c; 26d) der Exzenterscheibe (22a; 22c; 22d) entlang einer zur Drehachse (18a; 18c; 18d) senkrechten Richtung (28a; 28c; 28d) für sämtliche Drehlagen der Exzenterscheibe (22a; 22c; 22d) um die Drehachse (18a; 18c; 18d) gleich ist.

2. Oszillationsgartengerät nach einem der vorhergehenden Ansprüche, **dadurch gekennzeichnet, dass** der Führungsabschnitt (14a; 14b; 14c; 14d) zumindest einen ersten Teilbereich (30a; 30b; 30c; 30d) und wenigstens einen vom ersten Teilbereich (30a; 30b; 30c; 30d) verschiedenen zweiten Teilbereich (32a; 32b; 32c; 32d) aufweist, durch welche unterschiedliche Bearbeitungsphasen (46a, 48a; 46c, 48c, 50c; 46d, 48d, 50d) eines Oszillationszyklus (52a; 52c; 52d) eines Bearbeitungswerkzeugs (34a; 34e) gekennzeichnet sind.

3. Oszillationsgartengerät nach Anspruch 2, **dadurch gekennzeichnet, dass** zumindest einer der Teilbereiche (30a; 30b; 30c) bezüglich der Drehachse (18a; 18b; 18c) einen Kreis- und/oder Kreisringbogen beschreibt, um eine Bewegung des Bearbeitungswerkzeugs (34a, 34e) während zumindest einer Haltephase (54a; 54c) zumindest im Wesentlichen zeitweise anzuhalten.

4. Oszillationsgartengerät nach Anspruch 2 oder 3, **dadurch gekennzeichnet, dass** zumindest einer der Teilbereiche (32a; 32b; 32c; 32d) einen Teil einer Spiralform beschreibt, um eine Bewegung des Bearbeitungswerkzeugs (34a; 34e) während zumindest einer Schnittphase (56a; 56c; 56d, 58d, 60d) bereitzustellen.

5. Oszillationsgartengerät nach einem der Ansprüche 2 bis 4, **dadurch gekennzeichnet, dass** der erste Teilbereich (30a; 30b; 30c) sich über einen ersten Winkelbereich (36a; 36b; 36c) von 30° bis 100° bezüglich der Drehachse (18a; 18b; 18c) erstreckt und einen Kreis- und/oder Kreisringbogen beschreibt und der zweite Teilbereich (32a; 32b; 32c) in der Umfangsrichtung (20a; 20b; 20c) an den ersten Teilbereich (30a; 30b; 30c) anschließt, sich über einen zweiten Winkelbereich (38a; 38b; 38c) von 70° bis 110° bezüglich der Drehachse (18a; 18b; 18c) erstreckt und einen Teil einer Spiralform beschreibt.

6. Oszillationsgartengerät nach Anspruch 5, **dadurch gekennzeichnet, dass** der Führungsabschnitt (14c) zumindest einen vom ersten Teilbereich (30c) und zweiten Teilbereich (32c) verschiedenen dritten Teilbereich (40c) aufweist, welcher in der Umfangsrichtung (20c) an den ersten Teilbereich (30c) anschließt, sich über einen dritten Winkelbereich (42c) von 30° bis 60° bezüglich der Drehachse (18c) erstreckt und einen Teil einer Spiralform beschreibt.

7. Getriebeelement (44a; 44b; 44c; 44d) in Form einer Exzenterscheibe (22a; 22c; 22d) für ein Kurvengetriebe (12a; 12b; 12c; 12d) eines Oszillationsgartengeräts, insbesondere für eine Heckenschere, eine Grasschere und/oder eine Astschere, insbesondere für ein Oszillationsgartengerät nach einem der vorhergehenden Ansprüche, mit zumindest einer Drehachse (18a; 18b; 18c; 18d) und mit zumindest einem Führungsabschnitt (14a; 14b; 14c; 14d) für zumindest ein zu führendes Element (16a, 17a), wobei der Führungsabschnitt (14a; 14b; 14c; 14d) bezüglich der Drehachse (18a; 18b; 18c; 18d) in Umfangsrichtung (20a; 20b; 20c; 20d) geschlossen ausgebildet ist, wobei der Führungsabschnitt (14a; 14b; 14c; 14d) exzentrisch zur Drehachse (18a; 18b; 18c; 18d) angeordnet ist und in der Umfangsrichtung (20a; 20b; 20c; 20d) zumindest wesentlich von einer Kreis- und/oder Kreisringform abweicht, wobei der Führungsabschnitt (14a; 14c; 14d) als eine bezüglich der Drehachse (18a; 18c; 18d) radiale Außenfläche (24a; 24c; 24d) der Exzenterscheibe (22a; 22c; 22d) ausgebildet ist, wobei der Führungsabschnitt (14a; 14b; 14c; 14d) frei von einer Spiegelsymmetrie bezüglich einer die Drehachse (18a; 18b; 18c; 18d) beinhaltenden Spiegelsymmetrieebene und/oder frei von einer n-zähligen Drehsymmetrie bezüglich einer zur Drehachse (18a; 18b; 18c; 18d) parallelen Drehsymmetrieachse ist, **dadurch gekennzeichnet, dass** eine Erstreckung (26a; 26c; 26d) der Exzenterscheibe (22a; 22c; 22d) entlang einer zur Drehachse (18a; 18c; 18d) senkrechten Richtung (28a; 28c; 28d) für sämtliche Drehlagen der Exzenterscheibe (22a; 22c; 22d) um die Drehachse (18a; 18c; 18d) gleich ist.

8. Verfahren mit einem Oszillationsgartengerät, insbesondere einer Heckenschere, einer Grasschere und/oder einer Astschere, nach einem der Ansprüche 1 bis 7, mit einem Bearbeitungswerkzeug (34a; 34e), welches in einem Betriebszustand in Oszillationszyklen (52a; 52c; 52d) angetrieben wird, **dadurch gekennzeichnet, dass** die Oszillationszyklen (52a; 52c; 52d) jeweils in zumindest zwei Bearbeitungsphasen (46a, 48a; 46c, 48c, 50c; 46d, 48d, 50d) unterteilt werden.

9. Verfahren nach Anspruch 8, **dadurch gekennzeichnet, dass** die zwei Bearbeitungsphasen (46a, 48a; 46c, 48c, 50c; 46d, 48d, 50d) zumindest eine Haltephase und eine Schnittphase sind.

## Claims

1. Oscillating gardening device, in particular a hedge trimmer, shrub shears, grass shears and/or pruning shears, having a drive unit (10a) and having at least one cam mechanism (12a) which is drivable by the drive unit (10a) and has at least one guide portion (14a; 14b; 14c; 14d) for at least one element (16a, 17a) to be guided, wherein the guide portion (14a; 14b; 14c; 14d) is configured to be rotatable about a rotational axis (18a; 18b; 18c; 18d) and in a closed manner with respect thereto in the peripheral direction (20a; 20b; 20c; 20d), wherein the guide portion (14a; 14b; 14c; 14d) is arranged eccentrically to the rotational axis (18a; 18b; 18c; 18d), and deviates at least substantially from a circular and/or annular shape in the peripheral direction (20a; 20b; 20c; 20d), wherein the cam mechanism (12a) comprises at least one eccentric disc (22a; 22c; 22d) and the guide portion (14a; 14c; 14d) is configured as a radial outer face (24a; 24c; 24d), with respect to the rotational axis (18a; 18c; 18d), of the eccentric disc (22a; 22c; 22d), and the guide portion (14a; 14b; 14c; 14d) is free from mirror symmetry with respect to a mirror symmetry plane containing the rotational axis (18a; 18b; 18c; 18d) and/or free from n-fold rotational symmetry with respect to a rotational symmetry axis parallel to the rotational axis (18a; 18b; 18c; 18d), **characterized in that** an extent (26a; 26c; 26d) of the eccentric disc (22a; 22c; 22d) along a direction (28a; 28c; 28d) perpendicular to the rotational axis (18a; 18c; 18d) is equal for all rotational positions of the eccentric disc (22a; 22c; 22d) about the rotational axis (18a; 18c; 18d).

2. Oscillating gardening device according to one of the preceding claims, **characterized in that** the guide portion (14a; 14b; 14c; 14d) has at least one first segment (30a; 30b; 30c; 30d) and at least one second segment (32a; 32b; 32c; 32d) different from the first segment (30a; 30b; 30c; 30d), by which segments different processing phases (46a, 48a; 46c, 48c, 50c; 46d, 48d, 50d) of an oscillation cycle (52a; 52c; 52d) of a processing tool (34a; 34e) are identified.

3. Oscillating gardening device according to Claim 2, **characterized in that** at least one of the segments (30a; 30b; 30c) describes a circular and/or annular arc with respect to the rotational axis (18a; 18b; 18c) in order to at least substantially temporarily halt a movement of the processing tool (34a, 34e) during at least one holding phase (54a; 54c).

4. Oscillating gardening device according to Claim 2 or 3, **characterized in that** at least one of the segments (32a; 32b; 32c; 32d) describes a part of a spiral in order to provide a movement of the processing tool (34a; 34e) during at least one cutting phase (56a; 56c; 56d, 58d, 60d).

5. Oscillating gardening device according to one of Claims 2 to 4, **characterized in that** the first segment (30a; 30b; 30c) extends over a first angular range (36a; 36b; 36c) of 30° to 100° with respect to the rotational axis (18a; 18b; 18c) and describes a circular and/or annular arc, and the second segment (32a; 32b; 32c) adjoins the first segment (30a; 30b; 30c) in the peripheral direction (20a; 20b; 20c), extends over a second angular range (38a; 38b; 38c) of 70° to 110° with respect to the rotational axis (18a; 18b; 18c) and describes a part of a spiral.

6. Oscillating gardening device according to Claim 5, **characterized in that** the guide portion (14c) has at least one third segment (40c) different from the first segment (30c) and second segment (32c), which third segment adjoins the first segment (30c) in the peripheral direction (20c), extends over a third angular range (42c) of 30° to 60° with respect to the rotational axis (18c) and describes a part of a spiral.

7. Gear element (44a; 44b; 44c; 44d) in the form of an eccentric disc (22a; 22c; 22d) for a cam mechanism (12a; 12b; 12c; 12d) of an oscillating gardening device, in particular a hedge trimmer, grass shears and/or pruning shears, in particular for an oscillating gardening device according to one of the preceding claims, having at least one rotational axis (18a; 18b; 18c; 18d) and having at least one guide portion (14a; 14b; 14c; 14d) for at least one element (16a, 17a) to be guided, wherein the guide portion (14a; 14b; 14c; 14d) is configured to be closed in the peripheral direction (20a; 20b; 20c; 20d) with respect to the rotational axis (18a; 18b; 18c; 18d), wherein the guide portion (14a; 14b; 14c; 14d) is arranged eccentrically to the rotational axis (18a; 18b; 18c; 18d) and deviates at least substantially from a circular and/or annular shape in the peripheral direction (20a; 20b; 20c; 20d), wherein the guide portion (14a; 14c; 14d) is configured as a radial outer face (24a; 24c; 24d), with respect to the rotational axis (18a; 18c; 18d), of the eccentric disc (22a; 22c; 22d), wherein the guide portion (14a; 14b; 14c; 14d) is free from mirror symmetry with respect to a mirror symmetry plane containing the rotational axis (18a; 18b; 18c; 18d) and/or free from n-fold rotational symmetry with respect to a rotational symmetry axis parallel to the rotational axis (18a; 18b; 18c; 18d), **characterized in that** an extent (26a; 26c; 26d) of the eccentric disc (22a; 22c; 22d) along a direction (28a; 28c; 28d) perpendicular to the rotational axis (18a; 18c; 18d) is equal for all rotational positions of the eccentric disc (22a; 22c; 22d) about the rotational axis (18a; 18c; 18d).

8. Method using an oscillating gardening device, in particular a hedge trimmer, grass shears and/or pruning shears, according to one of Claims 1 to 7, having a processing tool (34a; 34e) which is driven in oscillation cycles (52a; 52c; 52d) in an operating state, **characterized in that** the oscillation cycles (52a; 52c; 52d) are each divided into at least two processing phases (46a, 48a; 46c, 48c, 50c; 46d, 48d, 50d).

9. Method according to Claim 8, **characterized in that** the two processing phases (46a, 48a; 46c, 48c, 50c; 46d, 48d, 50d) are at least one holding phase and one cutting phase.

## Revendications

1. Outil de jardinage oscillant, en particulier taille-haie, sculpte-haie, cisaille à gazon et/ou sécateur, comportant une unité d'entraînement (10a) et comportant au moins une transmission à came (12a) pouvant être entraînée par l'unité d'entraînement (10a), laquelle transmission à came comprend au moins une partie de guidage (14a ; 14b ; 14c ; 14d) pour au moins un élément (16a, 17a) à guider, dans lequel la partie de guidage (14a ; 14b ; 14c ; 14d) est réalisée de manière rotative autour d'un axe de rotation (18a ; 18b ; 18c ; 18d) et de manière fermée par rapport à celui-ci dans la direction périphérique (20a ; 20b ; 20c ; 20d), dans lequel la partie de guidage (14a ; 14b ; 14c ; 14d) est disposée de manière excentrée par rapport à l'axe de rotation (18a ; 18b ; 18c ; 18d) et diffère au moins sensiblement d'une forme circulaire et/ou circulaire annulaire dans la direction périphérique (20a ; 20b ; 20c ; 20d), dans lequel la transmission à came (12a) comporte au moins un disque excentrique (22a ; 22c ; 22d) et la partie de guidage (14a ; 14c ; 14d) est réalisée sous la forme d'une surface extérieure (24a ; 24c ; 24d), radiale par rapport à l'axe de rotation (18a ; 18c ; 18d), du disque excentrique (22a ; 22c ; 22d) et la partie de guidage (14a ; 14b ; 14c ; 14d) est exempte d'une symétrie spéculaire par rapport à un plan de symétrie spéculaire contenant l'axe de rotation (18a ; 18b ; 18c ; 18d) et/ou exempte d'une symétrie de révolution d'ordre n par rapport à un axe de symétrie de révolution parallèle à l'axe de rotation (18a ; 18b ; 18c ; 18d), **caractérisé en ce qu'**une étendue (26a ; 26c ; 26d) du disque excentrique (22a ; 22c ; 22d) le long d'une direction (28a ; 28c ; 28d) perpendiculaire à l'axe de rotation (18a ; 18c ; 18d) est la même pour toutes les positions en rotation du disque excentrique (22a ; 22c ; 22d) autour de l'axe de rotation (18a ; 18c ; 18d).

2. Outil de jardinage oscillant selon l'une des revendications précédentes, **caractérisé en ce que** la partie de guidage (14a ; 14b ; 14c ; 14d) comprend au moins une première région partielle (30a ; 30b ; 30c ; 30d) et au moins une deuxième région partielle (32a ; 32b ; 32c ; 32d) différente de la première région partielle (30a ; 30b ; 30c ; 30d), régions partielles par lesquelles différentes phases de traitement (46a, 48a ; 46c, 48c, 50c ; 46d, 48d, 50d) d'un cycle d'oscillation (52a ; 52c ; 52d) d'un outil de traitement (34a ; 34e) sont caractérisées.

3. Outil de jardinage oscillant selon la revendication 2, **caractérisé en ce qu'**au moins l'une des régions partielles (30a ; 30b ; 30c) décrit un arc circulaire et/ou un arc circulaire annulaire par rapport à l'axe de rotation (18a ; 18b ; 18c), afin d'arrêter au moins sensiblement temporairement un mouvement de l'outil de traitement (34a, 34e) pendant au moins une phase de maintien (54a ; 54c).

4. Outil de jardinage oscillant selon la revendication 2 ou 3, **caractérisé en ce qu'**au moins l'une des régions partielles (32a ; 32b ; 32c ; 32d) décrit une partie d'une forme en spirale, afin de produire un mouvement de l'outil de traitement (34a ; 34e) pendant au moins une phase de coupe (56a ; 56c ; 56d, 58d, 60d).

5. Outil de jardinage oscillant selon l'une des revendications 2 à 4, **caractérisé en ce que** la première région partielle (30a ; 30b ; 30c) s'étend sur une première plage angulaire (36a ; 36b ; 36c) de 30° à 100° par rapport à l'axe de rotation (18a ; 18b ; 18c) et décrit un arc circulaire et/ou circulaire annulaire et la deuxième région partielle (32a ; 32b ; 32c) se raccorde à la première région partielle (30a ; 30b ; 30c) dans la direction périphérique (20a ; 20b ; 20c), s'étend sur une deuxième plage angulaire (38a ; 38b ; 38c) de 70° à 110° par rapport à l'axe de rotation (18a ; 18b ; 18c) et décrit une partie d'une forme en spirale.

6. Outil de jardinage oscillant selon la revendication 5, **caractérisé en ce que** la partie de guidage (14c) comprend au moins une troisième région partielle (40c) différente de la première région partielle (30c) et de la deuxième région partielle (32c), laquelle troisième région partielle se raccorde à la première région partielle (30c) dans la direction périphérique (20c), s'étend sur une troisième plage angulaire (42c) de 30° à 60° par rapport à l'axe de rotation (18c) et décrit une partie d'une forme en spirale.

7. Élément de transmission (44a ; 44b ; 44c ; 44d) sous la forme d'un disque excentrique (22a ; 22c ; 22d) pour une transmission à came (12a ; 12b ; 12c ; 12d) d'un outil de jardinage oscillant, en particulier pour un taille-haie, une cisaille à gazon et/ou un sécateur, en particulier pour un outil de jardinage oscillant selon l'une des revendications précédentes, comportant au moins un axe de rotation (18a ; 18b ; 18c ; 18d) et comportant au moins une partie de guidage (14a ; 14b ; 14c ; 14d) pour au moins un élément (16a, 17a) à guider, dans lequel la partie de guidage (14a ; 14b ; 14c ; 14d) est réalisée de manière fermée par rapport à l'axe de rotation (18a ; 18b ; 18c ; 18d) dans la direction périphérique (20a ; 20b ; 20c ; 20d), dans lequel la partie de guidage (14a ; 14b ; 14c ; 14d) est disposée de manière excentrée par rapport à l'axe de rotation (18a ; 18b ; 18c ; 18d) et diffère au moins sensiblement d'une forme circulaire et/ou circulaire annulaire dans la direction périphérique (20a ; 20b ; 20c ; 20d), dans lequel la partie de guidage (14a ; 14c ; 14d) est réalisée sous la forme d'une surface extérieure (24a ; 24c ; 24d), radiale par rapport à l'axe de rotation (18a ; 18c ; 18d), du disque excentrique (22a ; 22c ; 22d), dans lequel la partie de guidage (14a ; 14b ; 14c ; 14d) est exempte d'une symétrie spéculaire par rapport à un plan de symétrie spéculaire contenant l'axe de rotation (18a ; 18b ; 18c ; 18d) et/ou exempte d'une symétrie de révolution d'ordre n par rapport à un axe de symétrie de révolution parallèle à l'axe de rotation (18a ; 18b ; 18c ; 18d), **caractérisé en ce qu'**une étendue (26a ; 26c ; 26d) du disque excentrique (22a ; 22c ; 22d) le long d'une direction (28a ; 28c ; 28d) perpendiculaire à l'axe de rotation (18a ; 18c ; 18d) est la même pour toutes les positions en rotation du disque excentrique (22a ; 22c ; 22d) autour de l'axe de rotation (18a ; 18c ; 18d).

8. Procédé utilisant un outil de jardinage oscillant, en particulier un taille-haie, une cisaille à gazon et/ou un sécateur, selon l'une des revendications 1 à 7, comportant un outil de traitement (34a ; 34e), lequel est entraîné dans des cycles d'oscillation (52a ; 52c ; 52d) dans un état de fonctionnement, **caractérisé en ce que** les cycles d'oscillation (52a ; 52c ; 52d) sont divisés respectivement en au moins deux phases de traitement (46a, 48a ; 46c, 48c, 50c ; 46d, 48d, 50d).

9. Procédé selon la revendication 8, **caractérisé en ce que** les deux phases de traitement (46a, 48a ; 46c, 48c, 50c ; 46d, 48d, 50d) sont au moins une phase de maintien et une phase de coupe.
